# EUROPÄISCHE PATENTSCHRIFT

(11) **EP 2 978 628 B1**
(45) Veröffentlichungstag und Bekanntmachung des Hinweises auf die Patenterteilung: **13.09.2017**
(21) Anmeldenummer: 14710923.5
(22) Anmeldetag: 19.03.2014
(51) Int. Cl.: B60N 2/22, B60N 2/30, B60N 2/12, B60N 2/20

(54) **EASY-ENTRY-SYSTEM FÜR EINEN FAHRZEUGSITZ UND FAHRZEUGSITZ**
EASY-ENTRY SYSTEM FOR A VEHICLE SEAT, AND VEHICLE SEAT
SYSTÈME D'ACCÈS FACILE POUR SIÈGE DE VÉHICULE ET SIÈGE DE VÉHICULE

(30) Priorität: 27.03.2013 DE 102013205521; 31.07.2013 DE 102013215028
(43) Veröffentlichungstag der Anmeldung: 03.02.2016
(73) Patentinhaber: Adient Luxembourg Holding S.à r.l., 2453 Luxembourg (LU)
(72) Erfinder: DILL, Thomas, 67699 Heiligenmoschel (DE); HAMMANN, Heinrich, 67806 Teschenmoschel (DE); PLUTA, Wolfgang, 67699 Heiligenmoschel (DE); WOLF, Christian, 67806 Katzenbach (DE); MARKEL, Christian, 55232 Alzey (DE)
(74) Vertreter: Liedhegener, Ralf
(86) Internationale Anmeldenummer: PCT/EP2014/055519
(87) Internationale Veröffentlichungsnummer: WO 2014/154549

(56) Entgegenhaltungen:
- DE-A1- 10 310 424
- DE-B3-102007 002 366
- US-A1- 2009 218 871

## Beschreibung

Die Erfindung betrifft ein Easy-Entry-System für einen Fahrzeugsitz und einen Fahrzeugsitz mit einem solchen Easy-Entry-System.

Im Stand der Technik sind verschiedene Easy-Entry-Systeme bekannt, die Bestandteil eines Fahrzeugsitzes sind, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehnen-Oberkante des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung verschiebbar sein. Des Weiteren weist der Fahrzeugsitz eine Komfortverstellung der Rückenlehne und eine Ladebodenfunktion auf. Diese beiden Funktionen sind mittels eines Komforthebels betätigbar.

Aus der DE 103 10 424 A1 ist ein Kraftfahrzeugsitz bekannt, der in Längsführungen verschiebbar und arretierbar am Fahrzeugboden gelagert ist und eine über Neigungsversteller um eine Drehachse schwenkbare Rückenlehne besitzt, wobei die Neigungsversteller über einen Bowdenzug durch Betätigung einer Handhabe zum Klappen der Rückenlehne lösbar sind und ein um die Drehachse schwenkbar gelagertes Übertragungsglied vorgesehen ist, welches über ein Zugglied mit der Arretierung der Längsführungen verbunden ist und beim Vorklappen der Rückenlehne mitgenommen wird, wodurch Zug auf das Zugglied ausgeübt und die Arretierung der Längsführungen gelöst wird und der Sitz nach vorn verschiebbar ist. Ein schwenkbar an der Rückenlehne gelagerter Mitnehmerhebel ist durch eine Feder außer Eingriff mit dem Übertragungsglied gehalten. Durch Anziehen des Bowdenzuges zum Lösen der Neigungsversteller gegen die Kraft der Feder schwenkt der Mitnehmerhebel in Eingriff mit dem Übertragungsglied und nimmt dieses beim Vorklappen der Rückenlehne mit.

Aufgabe der vorliegenden Erfindung ist es, ein gegenüber dem Stand der Technik verbessertes, insbesondere vereinfachtes, Easy-Entry-System für einen Fahrzeugsitz und einen Fahrzeugsitz anzugeben.

Die Aufgabe wird erfindungsgemäß gelöst, indem ein Easy-Entry-System zumindest einen Beschlag mit wenigstens einer Beschlagkomponente und einem Mitnahmeprofil aufweist, wobei die wenigstens eine Beschlagkomponente mit einem Übertragungselement gekoppelt ist und ein Entriegelungshebel des Easy-Entry-Systems zumindest mittelbar mit dem Übertragungselement verbunden ist, wobei ein Komforthebel einer Rückenlehne mit dem Mitnahmeprofil in Eingriff steht und ein Schwenkbereich der Rückenlehne bei ausgelöster Easy-Entry-Funktion mittels einer in den zumindest einen Beschlag eingreifenden Sperrklinke begrenzt ist, wobei ein Eingriff der Sperrklinke in den zumindest einen Beschlag durch Betätigen des Komforthebels zur Verstellung einer Position der Rückenlehne aufhebbar ist.

Insbesondere besteht der Beschlag des Fahrzeugsitzes aus einem Beschlagoberteil, welches an der Rückenlehne angeordnet ist und einem an einem Unterbau befestigten Beschlagunterteil, wobei an jeweils einer Seite des Fahrzeugsitzes ein solcher Beschlag angeordnet sein kann. Dabei ist das Mitnahmeprofil im Bereich des Beschlagoberteiles drehbar angeordnet.

Bei dem Übertragungselement handelt es sich insbesondere um eine Stange oder ein Rohr, welche bzw. welches die Beschlagkomponente mit einer gegebenenfalls weiteren vorhandenen Beschlagkomponente verbindet, wobei das Übertragungselement um seine Längsachse drehbar ist, wie aus der DE 10 2004 008 599 B3 bekannt ist. Sind zwei Beschlagkomponenten vorgesehen, sind diese mit dem Übertragungselement gekoppelt, wobei diese Kopplung vorzugsweise aus einer formschlüssigen Verbindung zwischen einem jeweiligen Ende des Übertragungselementes und der jeweiligen Beschlagkomponente resultiert. Zudem kann eine Axialsicherung vorgesehen sein, die beispielsweise ein sogenannter Schnellbefestiger ist und bei der Montage und bei einem Transport des Rastbeschlages ein Verschieben der Beschlagteile in axialer Richtung verhindert, wobei ein Verdrehen der Beschlagoberteile relativ zu den Beschlagunterteilen möglich ist.

Ein derart ausgebildetes Easy-Entry-System eines Fahrzeugsitzes weist im Vergleich zu aus dem Stand der Technik bekannten Easy-Entry-Systemen ein geringeres Gewicht auf und ist kostengünstiger herstellbar. Außer dem zumindest einen Beschlag in Form eines Rastbeschlages, wobei vorzugsweise zwei Beschläge vorgesehen sind, liegen alle weiteren Bestandteile des Easy-Entry-Systems nicht im Lastfluss.

Der Beschlag kann auch als sogenannter Flanschbeschlag ausgebildet sein.

Zudem sind weniger Bestandteile für ein solches Easy-Entry-System erforderlich, wodurch weniger Kosten entstehen und es ist keine Abstimmung von Bowdenzügen für einen Endbeschlag zur Begrenzung des Schwenkbereiches der Rückenlehne bei eingestellter Easy-Entry-Funktion erforderlich.

Besonders bevorzugt ist der Schwenkbereich der Rückenlehne durch die in eine Aussparung des zumindest einen Beschlages eingreifende Sperrklinke begrenzt, so dass in vorteilhafter Weise sichergestellt werden kann, dass die Rückenlehne bei eingestellter Easy-Entry-Funktion in dieser Position sicher gehalten ist.

In einer vorteilhaften Ausbildung weist der Komforthebel ein zu dem Mitnahmeprofil korrespondierendes Profil auf, wodurch der Komforthebel mit dem Beschlag gekoppelt ist und vorteilhaft sowohl eine Einstellung der Rückenlehne entsprechend einer von einem Insassen gewünschten Position als auch eine Positionierung der Rückenlehne in eine so genannte Ladebodenposition vornehmbar ist. In der Ladebodenposition kann die Rückenlehne auf einem die Sitzfläche bildenden Sitzpolster des Fahrzeugsitzes aufliegen.

In einer weiteren vorteilhaften Ausgestaltung ist das Übertragungselement kraft-, form- und/oder stoffschlüssig mit der Beschlagkomponente verbunden. Bevorzugt ist das Übertragungselement kraft-, form- und stoffschlüssig mit der Beschlagkomponente verbunden, so dass die Verbindung hinreichend beständig ist und die Betätigung des Entriegelungshebels zur Einstellung der Easy-Entry-Funktion über das Übertragungselement an die Beschlagkomponente und somit an das Mitnahmeprofil übertragbar ist.

Vorteilhaft bewegen sich bei Betätigung des Entriegelungshebels als Easy-Entry-Hebel das Mitnahmeprofil bildende Ausformungen ohne Wirkverbindung innerhalb des korrespondierenden Profils des Komforthebels. Dieser Bewegungsfreiraum als sogenanntes Spiel oder Freilauf verhindert ein Bewegen des Komforthebels, wodurch die Sperrklinke im Eingriff verbleibt.

Um zu ermöglichen, dass die Betätigung des Entriegelungshebels in vorteilhafter Weise an das Übertragungselement übertragbar ist, ist ein Zugelement, insbesondere ein Bowdenzug, vorgesehen, der sowohl mit dem Übertragungselement als auch mit dem Entriegelungshebel gekoppelt ist.

Bevorzugt ist die Sperrklinke mit einem Federelement gekoppelt, welches beim Eingriff der Sperrklinke in die Aussparung des zumindest einen Beschlages eine Restspannung, aufweist. Durch die Restspannung kann einer Geräuschbildung insbesondere durch das Federelement entgegengewirkt werden. Der Eingriff der Sperrklinke in die Aussparung ist durch Betätigung des Komforthebels aufhebbar, wobei hierbei eine Positionierung der Sperrklinke entgegen der Federkraft des Federelementes erfolgt und durch die an der Sperrklinke wirkende Federkraft diese im Wesentlichen selbsttätig wieder in die Aussparung des Beschlages eingreift.

In besonders vorteilhafter Weise ist das Federelement eine Schenkelfeder, wobei ein Schenkel mit der Sperrklinke und ein weiterer Schenkel mit der Rückenlehne des Fahrzeugsitzes verbunden ist. Dadurch ist das als Schenkelfeder ausgebildete Federelement bei einer Relativbewegung zwischen Sperrklinke und Rückenlehne sowohl vorspannbar als auch entspannbar.

Zudem betrifft die Erfindung einen Fahrzeugsitz mit einem solchen Easy-Entry-System.

Ausführungsbeispiele der Erfindung werden im Folgenden anhand von Ausführungsbeispielen näher erläutert.

Dabei zeigen:
- Figur 1: schematisch eine perspektivische Ansicht einer Tragkonstruktion eines auf einem Schienensystem angeordneten Fahrzeugsitzes,
- Figur 2: schematisch eine perspektivische Ansicht eines vergrößerten Ausschnittes der Tragkonstruktion,
- Figur 3: schematisch eine perspektivische Ansicht eines vergrößerten Ausschnittes der Tragkonstruktion, welcher dem vergrößerten Ausschnitt gemäß Figur 2 gegenüberliegt,
- Figur 4: schematisch einen Komforthebel des Fahrzeugsitzes und eine Sperrklinke in einer ersten Position,
- Figur 5: schematisch den Komforthebel des Fahrzeugsitzes und die Sperrklinke in einer zweiten Position,
- Figur 6: schematisch den halbtransparent dargestellten an der Tragkonstruktion angeordneten Komforthebel und die Sperrklinke,
- Figur 7: schematisch eine perspektivische Ansicht des Komforthebels,
- Figur 8: schematisch eine perspektivische Ansicht eines an der Tragkonstruktion angeordneten Beschlages, an welchem der Komforthebel anordbar ist,
- Figur 9: schematisch eine perspektivische Ansicht des an der Tragkonstruktion angeordneten Komforthebels und die Sperrklinke bei nicht aktivierter Funktion,
- Figur 10: schematisch eine perspektivische Ansicht des an der Tragkonstruktion angeordneten Komforthebels und die Sperrklinke bei aktivierter Easy-Entry-Funktion,
- Figur 11: schematisch eine perspektivische Ansicht des an der Tragkonstruktion angeordneten Komforthebels und die Sperrklinke bei Betätigen des Komforthebels,
- Figur 12: schematisch einen vergrößerten Ausschnitt eines Bereiches der Tragkonstruktion, in dem der Komforthebel angeordnet ist,
- Figur 13: schematisch eine Seitenansicht der Tragkonstruktion des Fahrzeugsitzes mit einer ersten Position einer Rückenlehne gemäß Figur 12,
- Figur 14: schematisch einen vergrößerten Ausschnitt des Bereiches der Tragkonstruktion, in dem der Komforthebel angeordnet ist, wobei die Rückenlehne in eine Easy-Entry-Position schwenkt,
- Figur 15: schematisch eine Seitenansicht der Tragkonstruktion des Fahrzeugsitzes gemäß Figur 14,
- Figur 16: schematisch einen vergrößerten Ausschnitt des Bereiches der Tragkonstruktion, in dem der Komforthebel angeordnet ist, wobei sich die Rückenlehne in der Easy-Entry-Position befindet,
- Figur 17: schematisch eine Seitenansicht der Tragkonstruktion des Fahrzeugsitzes gemäß Figur 16,
- Figur 18: schematisch einen vergrößerten Ausschnitt des Bereiches der Tragkonstruktion, in dem der Komforthebel angeordnet ist gemäß Figur 12,
- Figur 19: schematisch eine Seitenansicht der Tragkonstruktion des Fahrzeugsitzes ohne Betätigung des Entriegelungshebels,
- Figur 20: schematisch einen vergrößerten Ausschnitt des Bereiches der Tragkonstruktion, in dem der Komforthebel angeordnet ist, bei Betätigten desselben,
- Figur 21: schematisch eine Seitenansicht der Tragkonstruktion bei betätigtem Komforthebel,
- Figur 22: schematisch einen vergrößerten Ausschnitt des Bereiches der Tragkonstruktion bei betätigtem Komforthebel und aufrecht positionierter Rückenlehne,
- Figur 23: schematisch eine Seitenansicht der Tragkonstruktion mit aufrecht positionierter Rückenlehne,
- Figur 24: schematisch einen vergrößerten Ausschnitt der Tragkonstruktion mit in Fahrtrichtung geschwenkter Rückenlehne,
- Figur 25: schematisch eine Seitenansicht der Tragkonstruktion mit in Fahrtrichtung geschwenkter Rückenlehne,
- Figur 26: schematisch einen vergrößerten Ausschnitt der Tragkonstruktion mit noch weiter in Fahrtrichtung geschwenkter Rückenlehne,
- Figur 27: schematisch eine Seitenansicht der Tragkonstruktion mit noch weiter in Fahrtrichtung geschwenkter Rückenlehne,
- Figur 28: schematisch einen vergrößerten Ausschnitt der Tragkonstruktion mit in der Ladebodenposition angeordneter Rückenlehne und
- Figur 29: schematisch eine Seitenansicht der Tragkonstruktion mit in der Ladebodenposition angeordneter Rückenlehne.

Einander entsprechende Teile sind in allen Figuren mit den gleichen Bezugszeichen versehen.

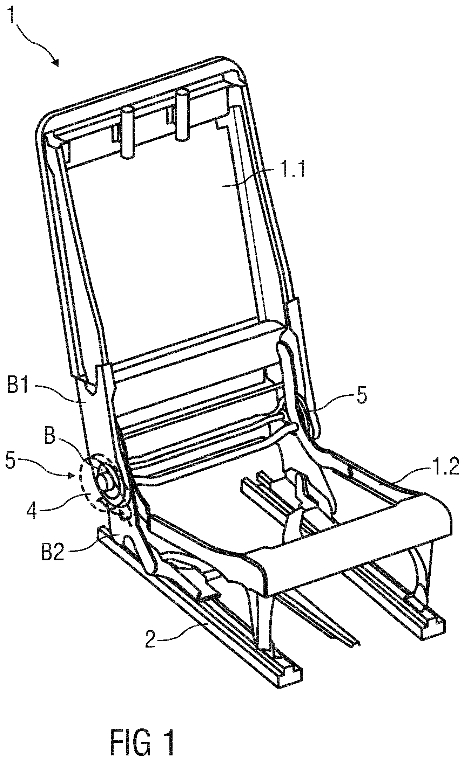

Figur 1 zeigt in einer perspektivischen Ansicht eine Tragkonstruktion 1 eines erfindungsgemäß ausgestatteten Fahrzeugsitzes. Ein Abschnitt bildet eine Rückenlehne 1.1 und ein weiterer Abschnitt der Tragkonstruktion 1 bildet eine Sitzpolsterauflage 1.2.

Der Fahrzeugsitz ist beispielsweise ein Vordersitz oder ein Fahrzeugsitz einer hinteren, beispielsweise einer zweiten Sitzreihe für ein Fahrzeug und ist auf einem Schienensystem 2 angeordnet, wodurch der Fahrzeugsitz in Längsrichtung des Fahrzeuges verschiebbar ist.

Um einen Einstieg in einen Fondbereich oder eine hintere Sitzreihe des Fahrzeuges zu vereinfachen, weist der Fahrzeugsitz eine mittels eines Easy-Entry-Systems realisierbare Easy-Entry-Funktion auf.

Bei der Easy-Entry-Funktion handelt es sich um eine Einstiegshilfe, die einen vergrößerten und somit bequemeren Zugang zu dem Fondbereich, insbesondere eines zweitürigen Fahrzeuges oder in eine hintere Sitzreihe eines mehrtürigen Fahrzeuges ermöglicht. Mittels des Easy-Entry-Systems wird der Fahrzeugsitz auf dem Schienensystem 2 in Fahrtrichtung verschoben, um den Einstiegsbereich zu vergrößern, wobei gleichzeitig die Rückenlehne 1.1 des Fahrzeugsitzes nach vorn geklappt wird. Dabei ist ein Schwenkbereich der Rückenlehne 1.1 bei ausgelöster Easy-Entry-Funktion begrenzt.

In einer nicht näher dargestellten Alternative kann es sich auch um einen Fahrzeugsitz mit einem Easy-Entry-System handeln, welcher nicht auf einem Schienensystem 2 angeordnet ist und somit nicht in Längsrichtung des Fahrzeuges verschiebbar ist.

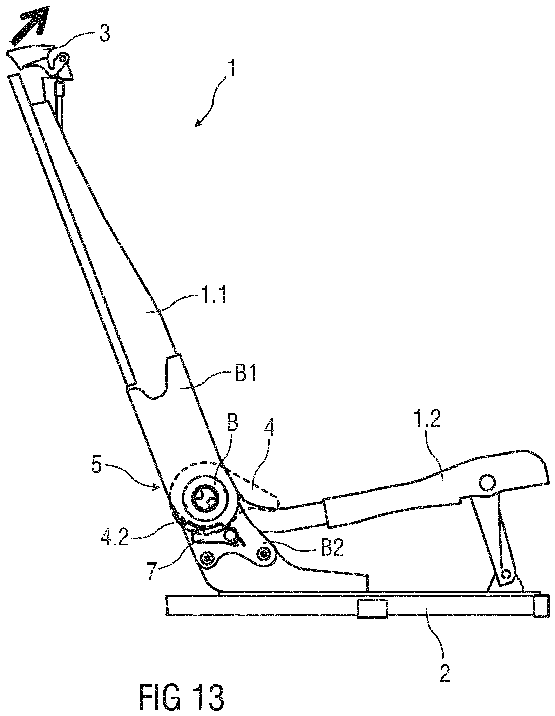

Das Easy-Entry-System weist einen an einer Oberkante der Rückenlehne 1.1 angeordneten Entriegelungshebel 3 auf, der in Figur 13 näher dargestellt ist. Durch Betätigen des Entriegelungshebels 3 wird die Easy-Entry-Funktion ausgelöst, wobei der Fahrzeugsitz verschoben und die Rückenlehne 1.1 nach vorn geschwenkt wird. Der Entriegelungshebel 3 kann alternativ auch an einer anderen geeigneten Position an dem Fahrzeugsitz oder im Fahrzeuginnenraum angeordnet sein.

Zudem ist an einer Seite der Rückenlehne 1.1 ein halb transparent dargestellter Komforthebel 4 angeordnet, der betätigbar ist, um die Rückenlehne 1.1 in eine von einem Fahrzeuginsassen gewünschte Position einzustellen. Des Weiteren ist es durch Betätigen des Komforthebels 4 möglich, zumindest die Rückenlehne 1.1 hinsichtlich einer sogenannten Ladebodenfunktion zu positionieren, wobei die Rückenlehne 1.1 in dieser Position vollständig umgeklappt ist und auf einem nicht näher dargestellten Sitzpolster des Fahrzeugsitzes aufliegen kann.

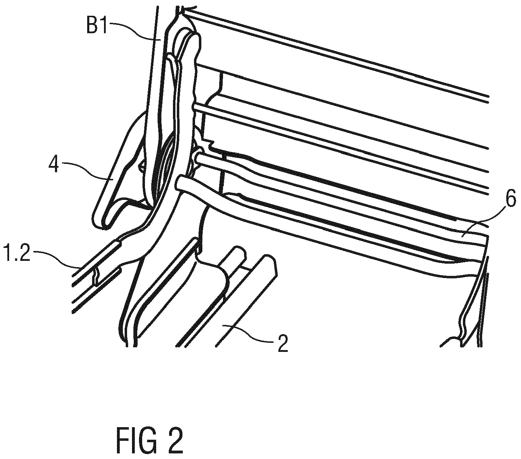

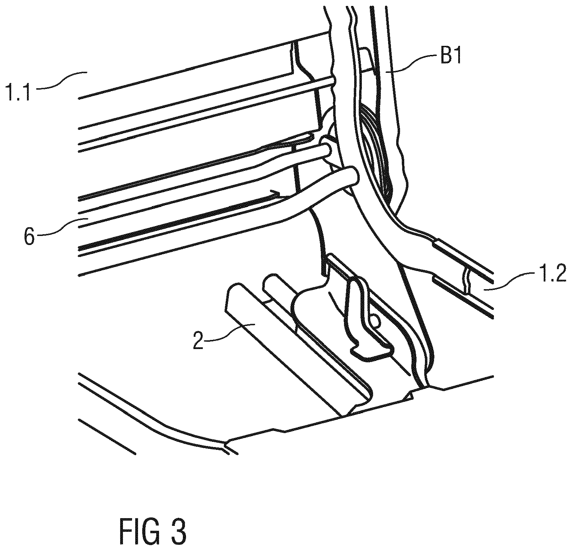

Die Figuren 2 und 3 zeigen jeweils einen vergrößerten Ausschnitt der Tragkonstruktion 1 des Fahrzeugsitzes in einer perspektivischen Ansicht, wobei ein Bereich, in welchem die Rückenlehne 1.1 mit der Sitzpolsterauflage 1.2 verbunden ist, dargestellt ist.

Figur 2 zeigt den Bereich der Tragkonstruktion 1, in dem der Komforthebel 4 angeordnet ist und Figur 3 zeigt den gegenüberliegenden Bereich.

Die Rückenlehne 1.1 ist schwenkbar, wobei eine Schwenkachse in Richtung Querausdehnung des Fahrzeuges verläuft und das Schwenken zum einen durch Betätigen des Entriegelungshebels 3 des Easy-Entry-Systems und zum anderen durch Betätigen des Komforthebels 4 auslösbar ist.

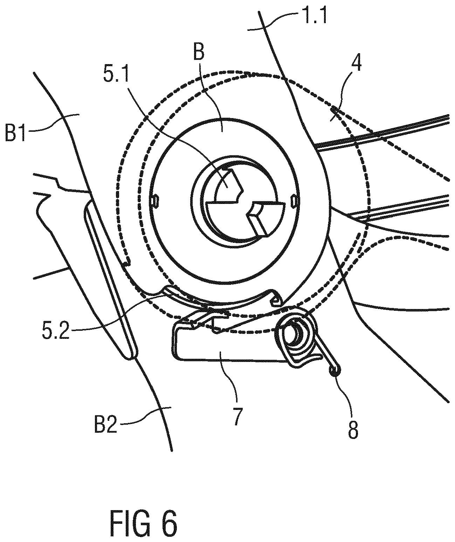

An jeder Seite der Rückenlehne 1.1 ist ein Beschlag 5 angeordnet, der aus einer Beschlagkomponente B, einem Beschlagoberteil B1 und einem Beschlagunterteil B2 gebildet ist. Das Beschlagoberteil B1 ist dabei lehnenfest und das Beschlagunterteil B2 unterbaufest angeordnet. Das Beschlagoberteil B1, an dem der Komforthebel 4 angeordnet ist, ist zumindest in Figur 6 näher dargestellt. Die Beschlagkomponente B ist scheibenförmig ausgebildet und ermöglicht eine Drehbewegung relativ zwischen dem Beschlagoberteil B1 und dem Beschlagunterteil B2

Die an jeder Seite der Rückenlehne 1.1 angeordneten Beschlagkomponenten B sind über ein Übertragungselement 6 in Form einer gekröpften Übertragungsstange oder eines Rohres miteinander gekoppelt, so dass eine Arretierung der Rückenlehne 1.1 beidseitig aufhebbar ist, um dieselbe schwenken zu können. Insbesondere ist jeweils eine Beschlagkomponente B an einem Ende des Übertragungselementes 6 formschlüssig befestigt.

Der Entriegelungshebel 3 als Bestandteil des Easy-Entry-Systems zur Auslösung der Easy-Entry-Funktion ist über einen nicht näher dargestellten Bowdenzug und/oder ein anderes geeignetes Element direkt mit dem Übertragungselement 6 gekoppelt. D. h., dass ein Ende des Bowdenzuges und/oder des anderen Elementes mit dem Entriegelungshebel 3 und ein gegenüberliegendes Ende des Bowdenzuges und/oder des anderen Elementes mit dem Übertragungselement 6 verbunden ist.

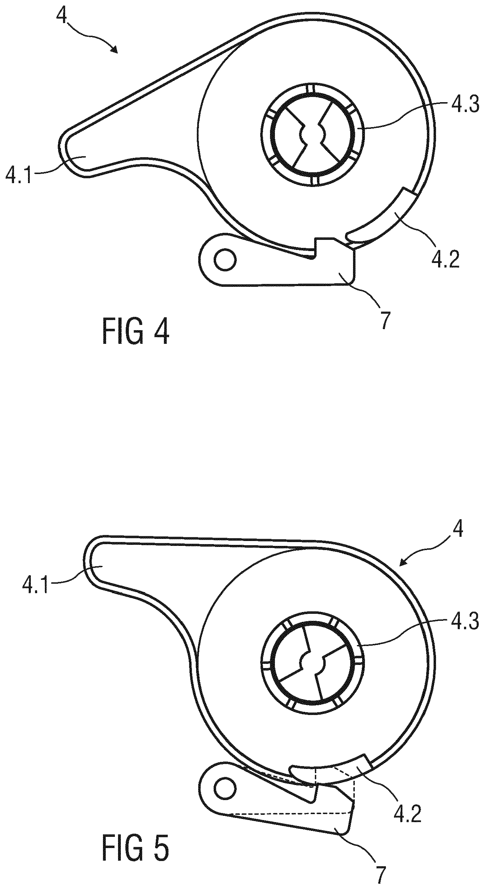

Die Figuren 4 und 5 zeigen jeweils den Komforthebel 4 mit einer mit diesem in Wirkverbindung stehenden federbelasteten Sperrklinke 7. Der Komforthebel 4 und die Sperrklinke 7 sind in Figur 4 in einer ersten Position und in Figur 5 in einer zweiten Position dargestellt.

Der Komforthebel 4 ist im Wesentlichen kreisförmig ausgebildet und weist einen abragenden Hebel 4.1 auf, der zur Betätigung durch einen Fahrzeuginsassen vorgesehen ist.

Der Komforthebel 4 weist in dem kreisförmig ausgebildeten Bereich eine senkrecht zur Längsausdehnung des Komforthebels 4 abragende Ausformung 4.2 auf, die sich über einen vorgegebenen Abschnitt randseitig an dem kreisförmigen Bereich erstreckt.

In der Mitte des kreisförmigen Bereiches des Komforthebels 4 ist ein mit einem in Figur 6 gezeigten Mitnahmeprofil 5.1 korrespondierendes Profil 4.3 ausgebildet.

Die Sperrklinke 7 ist an dem Beschlagunterteil B2 angeordnet und steht mit einer Aussparung 5.2 des Beschlagoberteiles B1 im Eingriff, wobei ein in Figur 6 gezeigtes Federelement 8 in dieser Position der Sperrklinke 7 nahezu entspannt ist, also eine Restspannung aufweist. Im Wesentlichen ist das Federelement 8 als eine Schenkelfeder ausgebildet.

Der Eingriff zwischen dem Beschlagoberteil B1 und der Sperrklinke 7 ist durch Betätigung des Komforthebels 4 aufhebbar, wie in der zweiten Position in Figur 5 gezeigt ist. Der Komforthebel 4 dreht sich durch die Betätigung, wobei die Sperrklinke 7 und die Ausformung 4.2 derart geformt sind, dass die Sperrklinke 7 mittels der Ausformung 4.2 außer Eingriff gebracht wird. Dabei erfolgt die Positionierung der Sperrklinke 7 entgegen einer durch das Federelement 8 wirkenden Federkraft.

Mittels der in Eingriff mit dem Beschlagoberteil B1, insbesondere dessen Aussparung 5.2, stehenden Sperrklinke 7 ist ein Schwenkbereich der Rückenlehne 1.1 bei ausgelöster Easy-Entry-Funktion begrenzt.

Wird die Wirkverbindung zwischen der Sperrklinke 7 und dem Beschlagoberteil B1 durch Betätigung des Komforthebels 4 aufgehoben, ist der Schwenkbereich der Rückenlehne 1.1 nicht mehr begrenzt, so dass die Rückenlehne 1.1 in einer gewünschten Position positionierbar ist oder bis in die Position der Ladebodenfunktion geschwenkt werden kann.

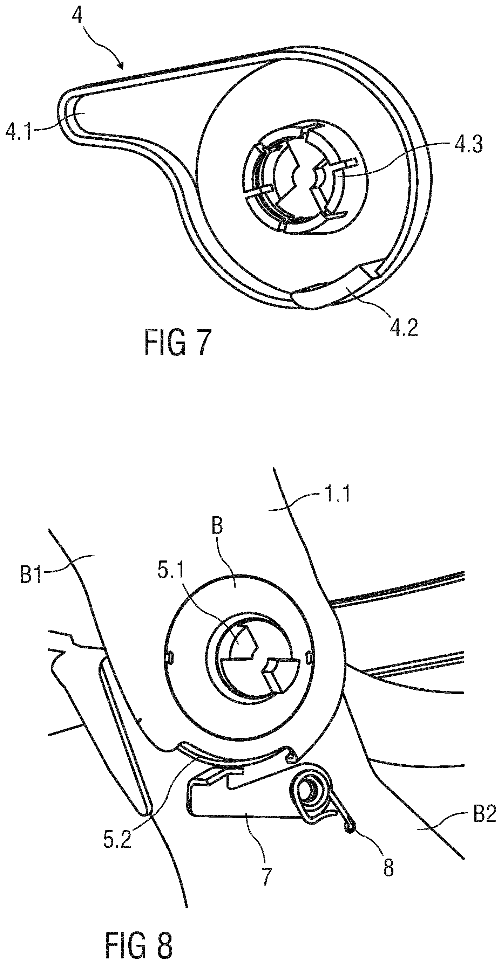

In Figur 7 ist die Rückseite des Komforthebels 4 in einer perspektivischen Ansicht dargestellt, wobei im Detail die abragende Ausformung 4.2 und das Profil 4.3, welches mit dem Mitnahmeprofil 5.1 der Beschlagkomponente B des Beschlages 5 korrespondiert, gezeigt sind. Das Mitnahmeprofil 5.1 und das korrespondierende Profil 4.3 sind derart ausgeformt, dass ein Freilauf von größer 30° vorgesehen ist. Dieser Freilauf ist dahingehend erforderlich, dass bei einem Entriegeln durch Betätigen des Entriegelungshebels 3 der Komforthebel 4 in seiner Position verbleibt und somit die Sperrklinke 7 einen Easy-Entry-Weg, d. h. die Schwenkbewegung der Rückenlehne 1.1 begrenzt. Der Freilauf dient also einer Entkopplung des Entriegelungshebels 3 von dem Komforthebel 4.

Figur 8 zeigt einen vergrößerten Ausschnitt der Tragkonstruktion 1, in dem der Beschlag 5 mit dem Mitnahmeprofil 5.1 und der Sperrklinke 7 angeordnet sind. Diese Beschlagkomponente B mit dem Mitnahmeprofil 5.1 weist eine Scheibenform auf und ist insbesondere formschlüssig mit dem Übertragungselement 6 fest verbunden. Das Übertragungselement 6 entriegelt den Beschlag 5 über einen nicht näher dargestellten Exzenter.

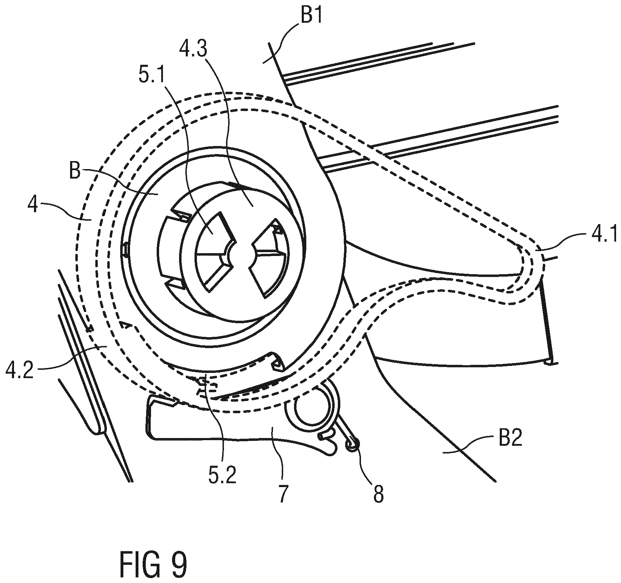

In den Figuren 9 bis 11 ist eine Kontur des an der Rückenlehne 1.1, insbesondere an der Beschlagkomponente B, angeordneten Komforthebels 4 dargestellt.

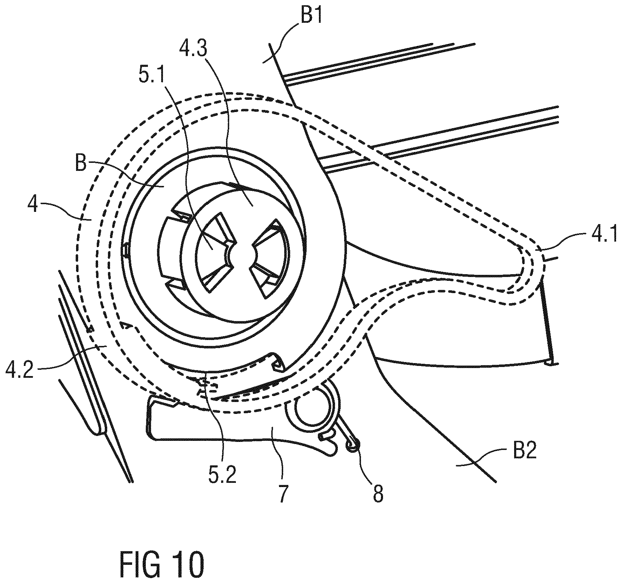

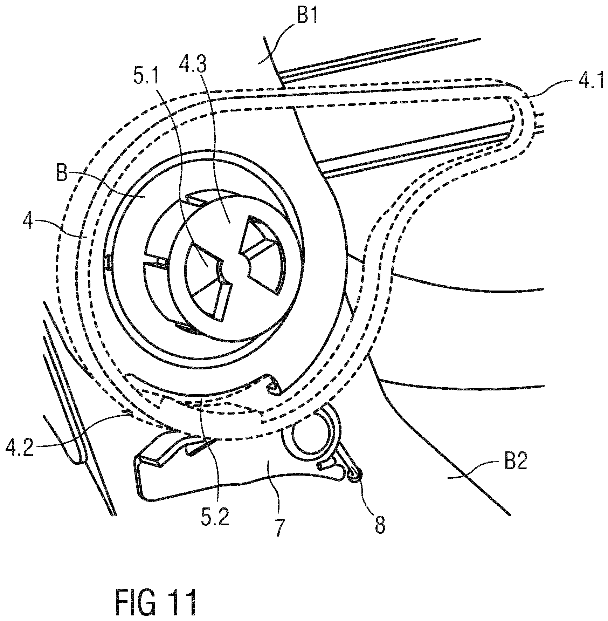

Figur 9 zeigt den Komforthebel 4 in einer Position, in welcher keine der möglichen Funktionen hinsichtlich des Schwenkens der Rückenlehne 1.1 ausgelöst ist. In Figur 10 ist die Easy-Entry-Funktion ausgelöst und in Figur 11 ist der Komforthebel 4 zur Einstellung einer Position der Rückenlehne 1.1 oder zur Positionierung der Rückenlehne 1.1 in die Ladebodenposition betätigt.

In Figur 9 ist der Komforthebel 4 in einer Ausgangsposition, also bei Nichtbetätigung gezeigt.

Dabei liegen das Mitnahmeprofil 5.1 bildende Ausformungen der Beschlagkomponente B an Randbereichen des mit dem Mitnahmeprofil 5.1 korrespondierenden Profils 4.3 des Komforthebels 4 an. Die Sperrklinke 7 steht im Eingriff mit dem Beschlagoberteil B1 und ist somit in der Aussparung 5.2 desselben angeordnet.

In Figur 10 ist der Entriegelungshebel 3 des Easy-Entry-Systems betätigt, wobei diese Betätigung über den Bowdenzug und/oder das andere Element an das Übertragungselement 6 übertragen wird, welches fest mit der Beschlagkomponente B verbunden ist. Durch die Betätigung dreht sich die Beschlagkomponente B mit dem Mitnahmeprofil 5.1 relativ zu dem Komforthebel 4, wobei sich die das Mitnahmeprofil 5.1 bildenden Ausformungen innerhalb des korrespondierenden Profils 4.3 bewegen, ohne dass eine Wirkverbindung besteht. Mit anderen Worten ist der Entriegelungshebel 3 von dem Komforthebel 4 entkoppelt.

In Figur 11 ist der Komforthebel 4 betätigt, wodurch die Sperrklinke 7 nicht mehr im Eingriff mit dem Beschlagoberteil B1 steht, so dass die Rückenlehne 1.1 in einer gewünschten Position und/oder in der Ladebodenposition positionierbar ist.

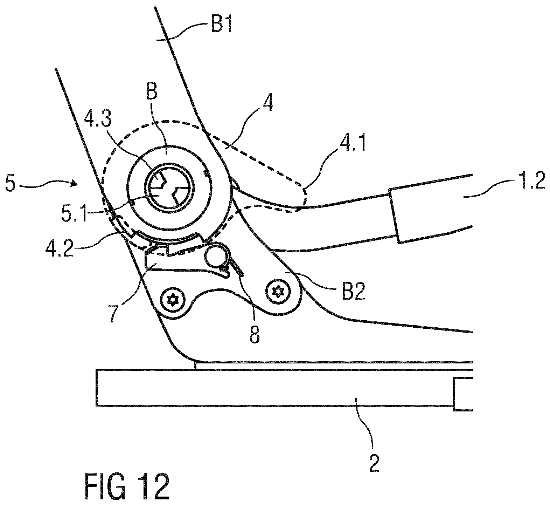

Figur 12 zeigt einen vergrößerten Ausschnitt des Bereiches der Tragkonstruktion, in dem der Komforthebel 4 angeordnet ist. Der Komforthebel 4 ist nicht betätigt und die Sperrklinke 7 steht im Eingriff mit dem Beschlagoberteil B1.

In Figur 13 ist eine Seitenansicht der Tragkonstruktion 1 dargestellt, wobei der Entriegelungshebel 3 zur Auslösung der Easy-Entry-Funktion betätigt ist. Diese Betätigung ist über den Bowdenzug und/oder das weitere Element und über das Übertragungselement 6 in Form der gekröpften Übertragungsstange an die Beschlagkomponente B und somit an das Mitnahmeprofil 5.1 übertragbar. Dabei steht die Sperrklinke 7 im Eingriff mit dem Beschlagoberteil B1.

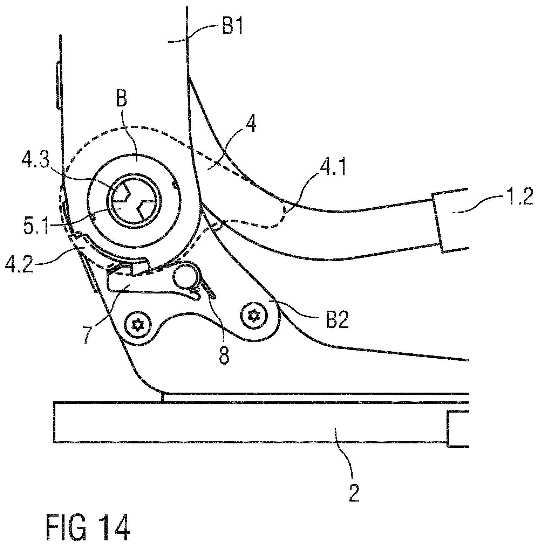

In Figur 14 ist der vergrößerte Ausschnitt gemäß Figur 12 gezeigt, wobei sich die Rückenlehne 1.1 durch die ausgelöste Easy-Entry-Funktion in einer aufrechten Position befindet und die Sperrklinke 7 im Eingriff mit dem Beschlagoberteil B1 steht.

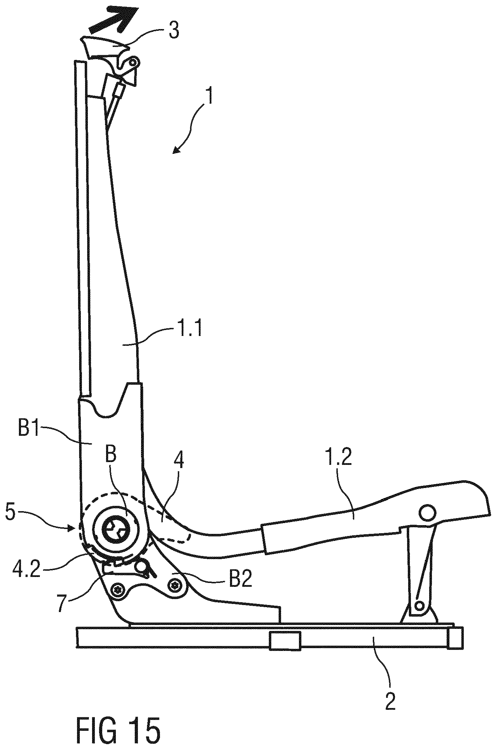

Figur 15 zeigt die Tragkonstruktion 1 des Fahrzeugsitzes in einer Seitenansicht entsprechend des vergrößerten Ausschnittes gemäß Figur 14.

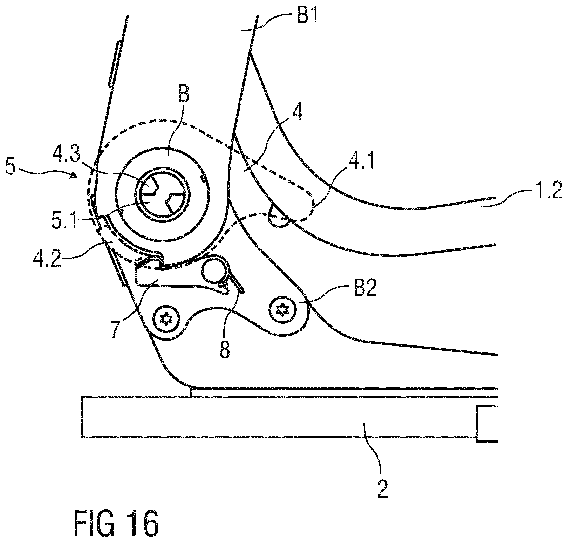

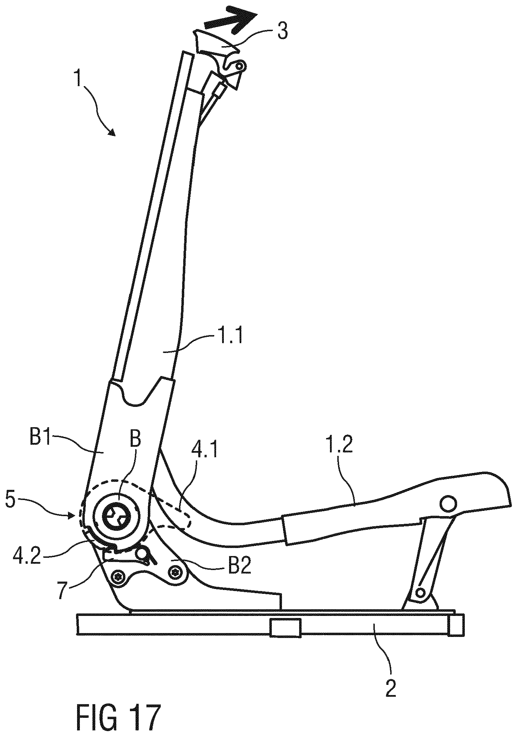

In den Figuren 16 und 17 befindet sich die Rückenlehne 1.1 entsprechend der Easy-Entry-Funktion in ihrer Endstellung, da der Schwenkbereich, wie oben beschrieben, begrenzt ist.

Die Sperrklinke 7, die zur Begrenzung des Schwenkbereiches vorgesehen ist, liegt an einem Randbereich der Aussparung 5.2 des Beschlagoberteiles B1 an, so dass die Rückenlehne 1.1 nicht weiter in Fahrtrichtung geschwenkt werden kann.

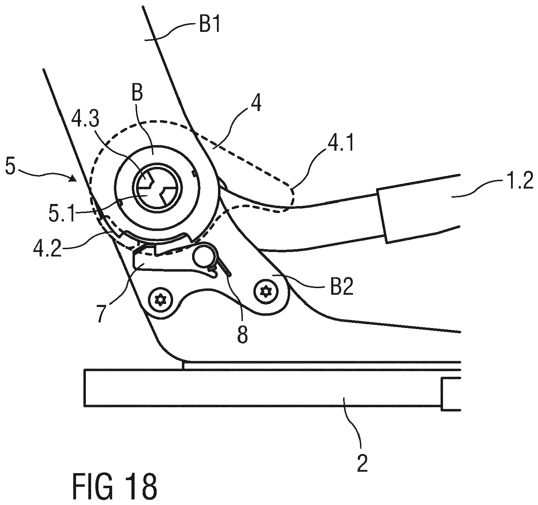

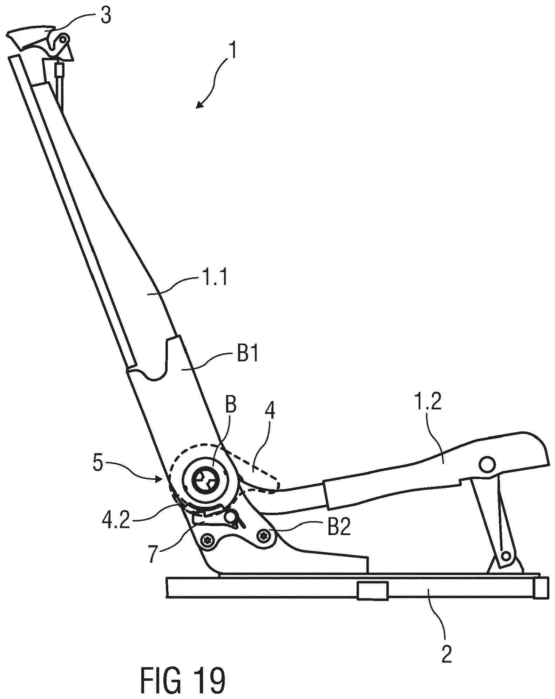

Die Figuren 18 und 19 zeigen die Tragkonstruktion 1 des Fahrzeugsitzes in einer Ausgangsstellung, in welcher die Rückenlehne 1.1 in einem durch einen Fahrzeuginsassen vorgegebenen Winkel zu der Sitzpolsterauflage 1.2 angeordnet ist.

Aus dieser in den Figuren 18 und 19 dargestellten Position soll die Rückenlehne 1.1 in eine Position der Ladebodenfunktion geschwenkt werden.

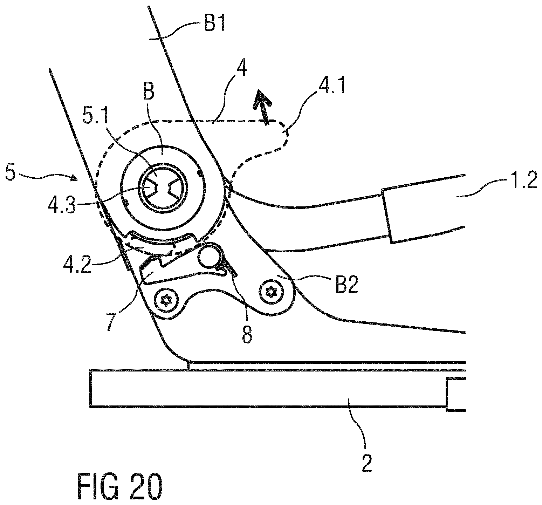

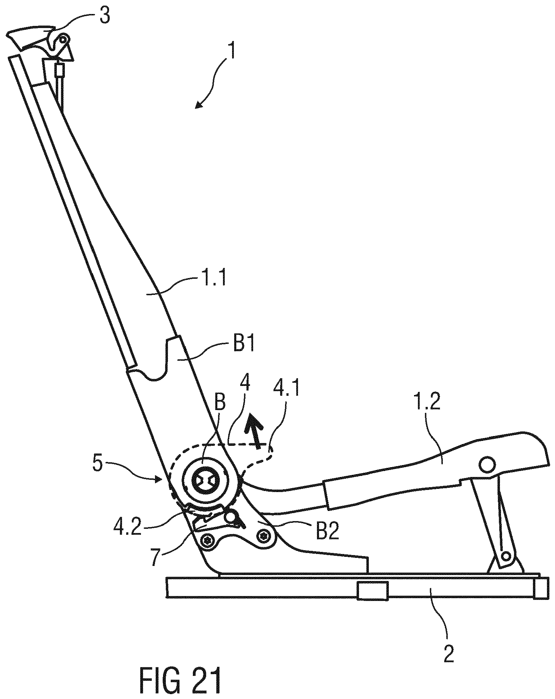

Dazu wird der Komforthebel 4 betätigt, wobei der Hebel 4.1 nach oben gezogen wird, wodurch sich der Komforthebel 4 dreht. Dadurch wird die Ausformung 4.2 des Komforthebels 4 derart in Richtung der Sperrklinke 7 positioniert, dass diese von dem Komforthebel 4 entgegen der Federkraft des Federelementes 8 wegbewegbar ist. Durch das Wegbewegen oder auch Wegschwenken der Sperrklinke 7 mittels der Ausformung 4.2 des Komforthebels 4 steht die Sperrklinke 7 nicht mehr im Eingriff mit dem Beschlagoberteil B1, wie in den Figuren 20 und 21 gezeigt ist.

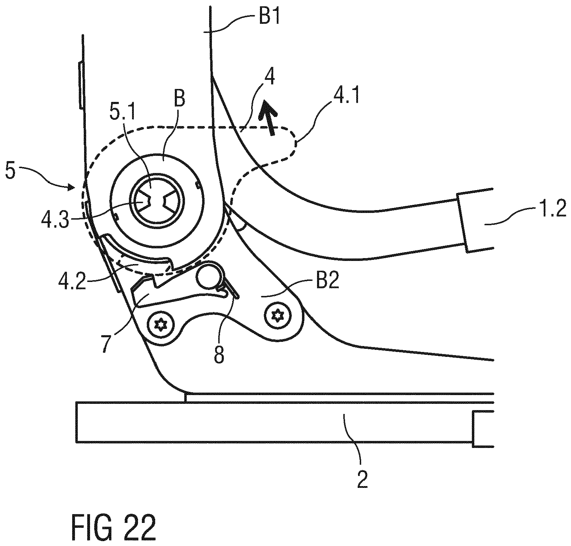

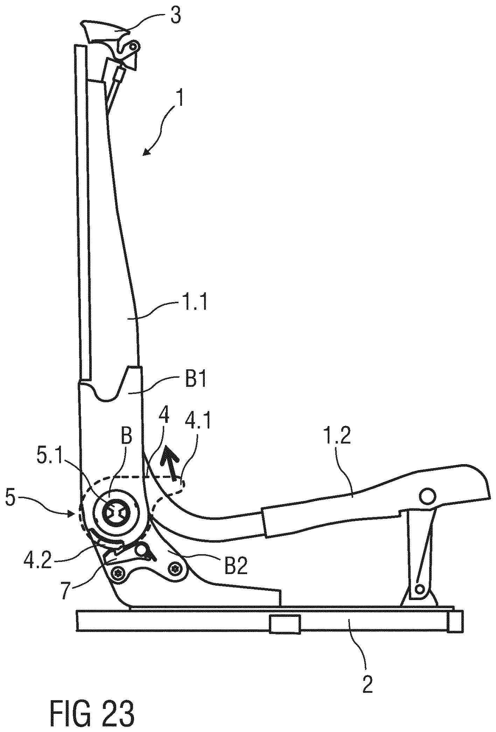

Die Figuren 22 und 23 zeigen die Rückenlehne 1.1 während des Schwenkens in die Position der Ladebodenfunktion, wobei die Rückenlehne 1.1 eine aufrechte Position aufweist.

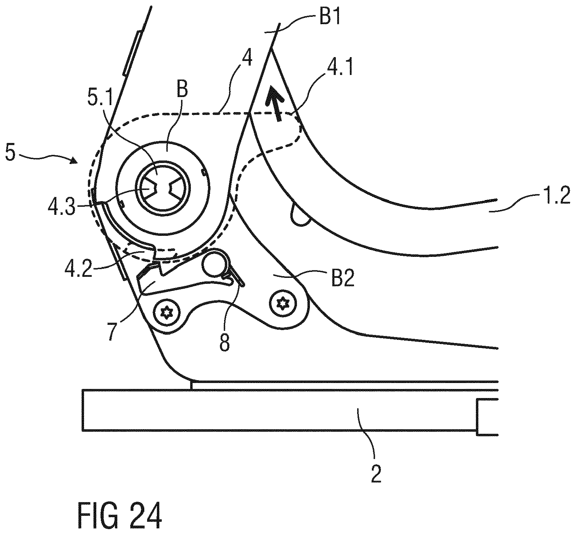

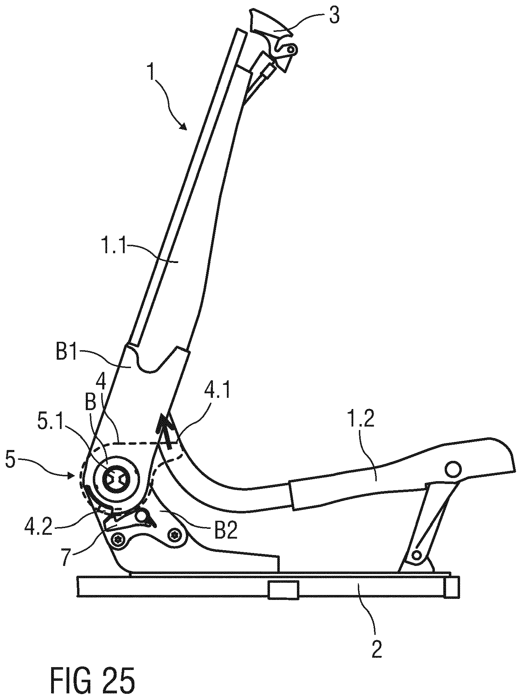

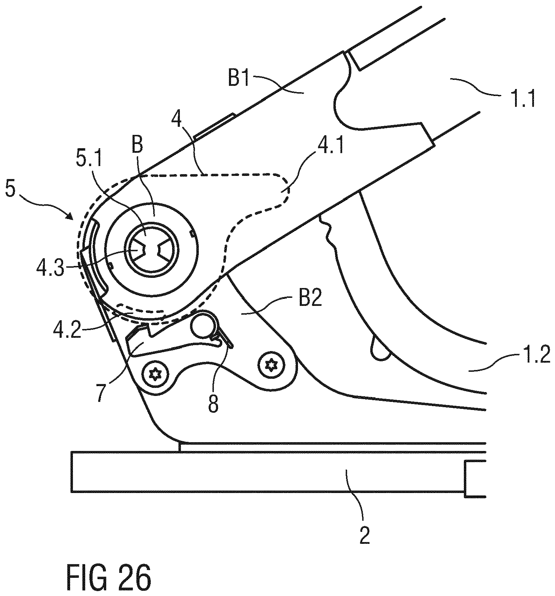

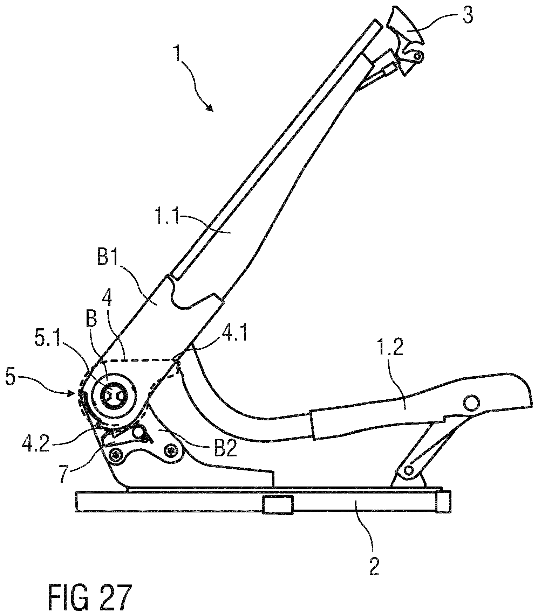

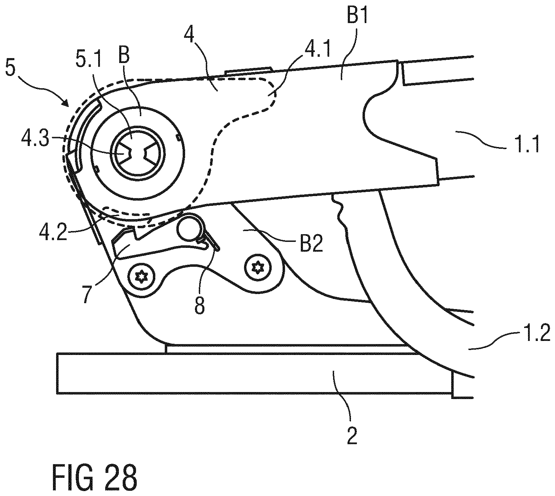

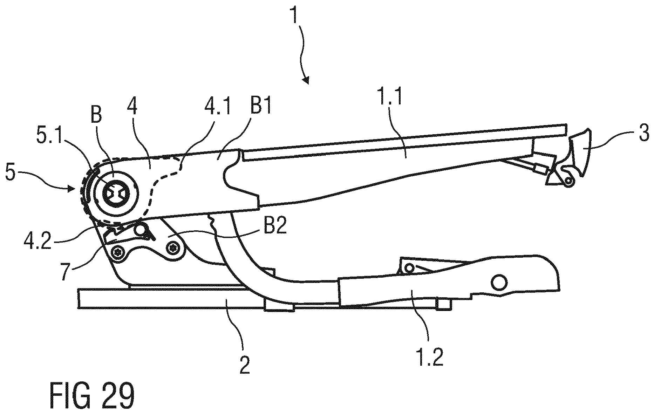

In den Figuren 24 bis 27 sind verschiedene Schwenkpositionen der Rückenlehne 1.1 gezeigt, wobei die Sperrklinke 7 über die gesamte Schwenkbewegung der Rückenlehne 1.1 bis zum Erreichen der in den Figuren 28 und 29 dargestellten Position der Ladebodenfunktion nicht im Eingriff mit dem Beschlagoberteil B1 steht.

Alternativ dazu, dass die Sperrklinke 7 an dem Beschlagunterteil B2 angeordnet ist, kann diese auch an dem Beschlagoberteil B1 angeordnet sein, und greift in das Beschlagunterteil B2 ein.

In einer möglichen Ausführungsform ist die Sperrklinke 7 an einem unterbaufesten Bestandteil der Tragkonstruktion 1 angeordnet und greift beispielsweise in eine Aussparung ein, die an einem Lehnenholm eines die Rückenlehne 1.1 bildenden Rahmens ausgebildet ist. Denkbar ist auch die umgekehrte Anordnung.

Ist an dem Fahrzeugsitz keine Komforteinstellung vorgesehen, so dient der Komforthebel 4 ausschließlich zur Einstellung der Ladebodenposition des Fahrzeugsitzes.

### Bezugszeichenliste

- 1: Tragkonstruktion
- 1.1: Rückenlehne
- 1.2: Sitzpolsterauflage
- 2: Schienensystem
- 3: Entriegelungshebel
- 4: Komforthebel
- 4.1: Hebel
- 4.2: Ausformung
- 4.3: Profil
- 5: Beschlag
- 5.1: Mitnahmeprofil
- 5.2: Aussparung
- 6: Übertragungselement
- 7: Sperrklinke
- 8: Federelement

- B: Beschlagkomponente
- B1: Beschlagoberteil
- B2: Beschlagunterteil

## Patentansprüche

1. Easy-Entry-System für einen Fahrzeugsitz,
**gekennzeichnet durch** zumindest einen Beschlag (5) mit wenigstens einer Beschlagkomponente (B) und einem Mitnahmeprofil (5.1), wobei die wenigstens eine Beschlagkomponente (B) mit einem Übertragungselement (6) gekoppelt ist und ein Entriegelungshebel (3) des Easy-Entry-Systems zumindest mittelbar mit dem Übertragungselement (6) verbunden ist, wobei ein Komforthebel (4) einer Rückenlehne (1.1) mit dem Mitnahmeprofil (5.1) in Eingriff steht und ein Schwenkbereich der Rückenlehne (1.1) bei ausgelöster Easy-Entry-Funktion mittels einer in den zumindest einen Beschlag (5) eingreifenden Sperrklinke (7) begrenzt ist, wobei ein Eingriff der Sperrklinke (7) in den zumindest einen Beschlag (5) durch Betätigen des Komforthebels (4) zur Verstellung einer Position der Rückenlehne (1.1) aufhebbar ist.

2. Easy-Entry-System nach Anspruch 1,
**dadurch gekennzeichnet, dass** der Schwenkbereich der Rückenlehne (1.1) durch die in eine Aussparung (5.2) des zumindest einen Beschlages (5) eingreifende Sperrklinke (7) begrenzt ist.

3. Easy-Entry-System nach Anspruch 1 oder 2,
**dadurch gekennzeichnet, dass** der Komforthebel (4) ein zu dem Mitnahmeprofil (5.1) korrespondierendes Profil (4.3) aufweist.

4. Easy-Entry-System nach einem der vorhergehenden Ansprüche, **dadurch gekennzeichnet, dass** das Übertragungselement (6) kraft-, form- und/oder stoffschlüssig mit der Beschlagkomponente (B) verbunden ist.

5. Easy-Entry-System nach Anspruch 3 oder 4,
**dadurch gekennzeichnet, dass** sich bei Betätigung des Entriegelungshebels (3) das Mitnahmeprofil (5.1) bildende Ausformungen ohne Wirkverbindung innerhalb des korrespondierenden Profils (4.3) bewegen.

6. Easy-Entry-System nach einem der vorhergehenden Ansprüche,
**dadurch gekennzeichnet, dass** der Entriegelungshebel (3) über ein Zugelement, insbesondere einen Bowdenzug, mit dem Übertragungselement (6) gekoppelt ist.

7. Easy-Entry-System nach einem der Ansprüche 2 bis 6,
**dadurch gekennzeichnet, dass** die Sperrklinke (7) mit einem Federelement (8) gekoppelt ist, welches beim Eingriff der Sperrklinke (7) in die Aussparung (5.2) des zumindest einen Beschlages (5) eine Restspannung aufweist.

8. Easy-Entry-System nach Anspruch 7,
**dadurch gekennzeichnet, dass** das Federelement (8) eine Schenkelfeder ist, wobei ein Schenkel mit der Sperrklinke (7) und ein weiterer Schenkel mit der Rückenlehne (1.1) des Fahrzeugsitzes verbunden ist.

9. Fahrzeugsitz mit einem Easy-Entry-System nach einem der Ansprüche 1 bis 8.

## Claims

1. Easy-entry system for a vehicle seat, **characterized by** at least one fitting (5) with at least one fitting component (B) and a carry-along profile (5.1), wherein the at least one fitting component (B) is coupled to a transmission element (6), and an unlocking lever (3) of the easy-entry system is connected at least indirectly to the transmission element (6), wherein a comfort lever (4) of a backrest (1.1) is in engagement with the carry-along profile (5.1), and a pivoting range of the backrest (1.1) when the easy-entry function is triggered is limited by means of a pawl (7) engaging in the at least one fitting (5), wherein engagement of the pawl (7) in the at least one fitting (5) can be cancelled by actuating the comfort lever (4) in order to adjust a position of the backrest (1.1).

2. Easy-entry system according to Claim 1, **characterized in that** the pivoting range of the backrest (1.1) is limited by the pawl (7) engaging in a recess (5.2) of the at least one fitting (5).

3. Easy-entry system according to Claim 1 or 2, **characterized in that** the comfort lever (4) has a profile (4.3) corresponding to the carry-along profile (5.1).

4. Easy-entry system according to one of the preceding claims, **characterized in that** the transmission element (6) is connected to the fitting component (B) in a frictional, interlocking and/or integrally bonded manner.

5. Easy-entry system according to Claim 3 or 4, **characterized in that**, when the unlocking lever (3) is actuated, formations forming the carry-along profile (5.1) move without operative connection within the corresponding profile (4.3).

6. Easy-entry system according to one of the preceding claims, **characterized in that** the unlocking lever (3) is coupled to the transmission element (6) via a tension element, in particular a Bowden cable.

7. Easy-entry system according to one of Claims 2 to 6, **characterized in that** the pawl (7) is coupled to a spring element (8) which, on engagement of the pawl (7) in the recess (5.2) of the at least one fitting (5), has a residual tension.

8. Easy-entry system according to Claim 7, **characterized in that** the spring element (8) is a leg spring, wherein one leg is connected to the pawl (7) and a further leg is connected to the backrest (1.1) of the vehicle seat.

9. Vehicle seat with an easy-entry system according to one of Claims 1 to 8.

## Revendications

1. Système Easy-Entry pour un siège de véhicule, **caractérisé par** au moins une ferrure (5) avec au moins un élément de ferrure (B) et un profil d'entraînement (5.1), dans lequel l'au moins un élément de ferrure (B) est couplé avec un élément de transmission (6) et un levier de déverrouillage (3) du système Easy-Entry est relié au moins indirectement à l'élément de transmission (6), dans lequel un levier de confort (4) d'un dossier (1.1) est en prise avec le profil d'entraînement (5.1) et une plage de pivotement du dossier (1.1) est limitée, en cas de fonction Easy-Entry déclenchée, au moyen d'un cliquet d'arrêt (7) en prise avec l'au moins une ferrure (5), dans lequel une mise en prise du cliquet d'arrêt (7) avec l'au moins une ferrure (5) peut être annulée par actionnement du levier de confort (4) pour le réglage d'une position du dossier (1.1).

2. Système Easy-Entry selon la revendication 1, **caractérisé en ce que** la plage de pivotement du dossier (1.1) est limitée par le cliquet d'arrêt (7) en prise avec un évidement (5.2) de l'au moins une ferrure (5).

3. Système Easy-Entry selon la revendication 1 ou 2, **caractérisé en ce que** le levier de confort (4) présente un profil (4.3) correspondant au profil d'entraînement (5.1).

4. Système Easy-Entry selon l'une des revendications précédentes, **caractérisé en ce que** l'élément de transmission (6) est relié par conjugaison de forces et/ou de matières à l'élément de ferrure (B).

5. Système Easy-Entry selon la revendication 3 ou 4, **caractérisé en ce que**, lors de l'actionnement du levier de déverrouillage (3), des déformations formant le profil d'entraînement (5.1) se déplacent sans liaison active à l'intérieur du profil (4.3) correspondant.

6. Système Easy-Entry selon l'une des revendications précédentes, **caractérisé en ce que** le levier de déverrouillage (3) est couplé par l'intermédiaire d'un élément de câble, en particulier un câble Bowden, avec l'élément de transmission (6).

7. Système Easy-Entry selon l'une des revendications 2 à 6, **caractérisé en ce que** le cliquet d'arrêt (7) est couplé avec un élément de ressort (8) lequel, lors de la mise en prise du cliquet d'arrêt (7) avec l'évidement (5.2) de l'au moins une ferrure (5), présente une tension résiduelle.

8. Système Easy-Entry selon la revendication 7, **caractérisé en ce que** l'élément de ressort (8) est un ressort à branches, dans lequel une branche est reliée au cliquet d'arrêt (7) et une autre branche au dossier (1.1) du siège de véhicule.

9. Siège de véhicule avec un système Easy-Entry selon l'une des revendications 1 à 8.
